# EUROPÄISCHE PATENTANMELDUNG

(11) **EP 2 441 602 A1**
(43) Veröffentlichungstag der Anmeldung: **18.04.2012**
(21) Anmeldenummer: 10186998.0
(22) Anmeldetag: 08.10.2010
(51) Int. Cl.: B60G 3/06, B60G 15/06, B60G 15/07, B60G 13/00

(54) **Radaufhängung mit einem Feder-Dämpferbein**

(71) Anmelder: Ford Global Technologies, LLC, Dearborn, MI 48126 (US)
(72) Erfinder: van der Jagt, Pim, 52538 Selfkant (DE); David, Wolfgang, 52074, Aachen (DE); Frantzen, Michael Johannes, 52076, Aachen (DE); Zandbergen, Paul, 6291 BX, Vaals (AN); Wolf-Monheim, Friedrich, 52074, Aachen (DE); Dornhege, Jens, 50259, Pulheim (DE); Trefzger, Jochen, 51371, Leverkusen (DE)
(74) Vertreter: Drömer, Hans-Carsten

(57) **Zusammenfassung**

Die Erfindung betrifft eine Radaufhängung für ein Kraftfahrzeug. Diese umfaßt ein Feder-Dämpferbein (10), welches mit einem Achsschenkelträger (20) verbindbar ist. Weiterhin ist ein Querlenker (30) vorgesehen, welcher an seinem einen Ende (31) um eine Achse (A2) schwenkbar gelagert ist. An seinem anderen Ende (32) ist der Querlenker (30) unter Ausbildung einer Lagerstelle (21) am Achsschenkelträger (20) angelenkt. Die Erfindung schlägt nun vor, das Feder-Dämpferbein (10) in Seitenansicht der Radaufhängung schräg zum Querlenker (30) anzuordnen. Weiterhin ist die Lenkdrehachse (A1) durch die Lagerstelle (21) und den Kinematikpunkt des Feder-Dämpferbeinstützlagers (11) bestimmt.

## Beschreibung

Die Erfindung betrifft eine Radaufhängung für ein Kraftfahrzeug der im Oberbegriff von Anspruch 1 genannten Art. Solche Radaufhängungen der bekannten McPherson-Bauweise kommen insbesondere bei Vorderradaufhängungen von Kraftfahrzeugen mit Vorderradantrieb zum Einsatz.

Die DE 44 13 412 A1 offenbart einen Omnibus, wobei ein derartiger modularer Aufbau vorgesehen ist, dass eine komplette Einheit aus Antriebsaggregat, Getriebe, Transfergetriebe, Gelenkwellenverbindung und Hinterachsdifferential in einem Aggregatträger montiert ist.

Die DE 30 05 916 A1 beschäftigt sich mit einer Radaufhängung, insbesondere einer gelenkten Kraftfahrzeugvorderachse, bei welcher der Radträger durch zwei übereinander angeordnete Führungslenker, insbesondere Quer- oder Schräglenker, geführt und durch ein an dem einen Führungslenker angelenktes Dämpferbein in hauptsächlich vertikaler Richtung abgestützt ist. Das Dämpferbein ist direkt am unteren Führungslenker angelenkt, welcher am Fahrzeugaufbau angelenkt ist. Der obere Führungslenker hingegen ist am Dämpferbein angelenkt.

Bei der Konzeption eingangs genannter Radaufhängungen sind mehrere Aspekte zu berücksichtigen. Zum einen ist es vorteilhaft, einen negativen Lenkrollradius vorzusehen. Unter Lenkrollradius versteht man den Abstand einer gedachten verlängerten Linie der Lenkdrehachse zur Mitte der Radaufstandsfläche. Beim Bremsen auf Fahrbahnen mit unterschiedlicher Reibhaftung der beiden Fahrzeugseiten ergibt sich bei negativem Lenkrollradius an der Vorderachse ein stabilisierender Effekt in Bezug auf die Gierbewegung des Fahrzeugs.

Die DE 29 45 802 (= US 4,341,396) beschreibt eine Vorderradaufhängung für Kraftfahrzeuge mit einem negativen Lenkrollradius. Hierbei ist ein Feder-Dämpferbein vorgesehen, welches über zwei Streben mit dem Achsschenkelträger verbunden ist, wobei die untere der beiden Streben oberhalb ihrer Anlenkung an den Achsschenkelträger ein zweites Gelenk aufweist, das um eine im Wesentlichen waagerechte Achse drehbar ist. Nachteilig bei dieser Anordnung ist, dass das Feder-Dämpferbein in der Seitenansicht der Radaufhängung senkrecht auf dem Querlenker stehen muß, um ein Verklemmen beim Durchfedern der Radaufhängung zu vermeiden. Hierfür ist eine gewisse Höhe des Feder-Dämpferbeinstützlagers notwendig, was sich einerseits nachteilig auf den Fußgängerschutz auswirkt und andererseits Einschränkungen im Bereich des Designs des Fahrzeuges mit sich bringt, da die Motorhaube durch die Höhe des Feder-Dämpferbeinstützlagers eine gewisse Höhe aufweisen muß. Obwohl der hier zitierte Stand der Technik schon niedrigere Feder-Dämpferbeinhöhen als bei der klassischen McPherson-Anordnung zuläßt, sind diese für einen relevanten Fußgängerschutz noch zu hoch.

Der Erfindung liegt die Aufgabe zugrunde, eine Radaufhängung zu entwickeln, die die vorgenannten Nachteile vermeidet und eine stärkere Reduzierung der Höhe des Feder-Dämpferbeinstützlagers zuläßt, ohne die Vorteile der klassischen McPherson-Radaufhängung zu verlieren.

Erfindungsgemäß wird die Aufgabe durch eine Radaufhängung mit den Merkmalen des Anspruchs 1 gelöst, wobei das Feder-Dämpferbein in Seitenansicht der Radaufhängung schräg zum Querlenker, also zum unteren Querlenker angeordnet ist, während die Lenkdrehachse durch die Lagerstelle des Querlenkers, also des unteren Querlenkers am Achsschenkelträger und den Kinematikpunkt des Feder-Dämpferbeinstützlagers bestimmt ist. Dadurch, dass das Feder-Dämpferbein in Seitenansicht der Radaufhängung schräg zum Querlenker angeordnet ist, kann die Bauhöhe des Feder-Dämpferbeinstützlagers erheblich reduziert werden. Hierdurch ist es möglich, einen besseren Fußgängerschutz sicherzustellen und auch die Motorhaube bzw. den Frontbereich des Fahrzeuges in Bezug auf das Design besser und flexibler anzupassen. In diesem Zusammenhang wird unter schräg verstanden, dass der Winkel zwischen der Symmetrieachse des Feder-Dämpferbeins und dem Querlenker nicht 90° beträgt. Der realisierbare Winkelbereich resultiert nicht zwingend aus der Kinematik der Radaufhängung und kann Werte von bis zu 30° erreichen. Durch die erfindungsgemäße Anordnung kann der vertikale Bauraumbedarf des Feder-Dämpferbeins um 10 bis 20%, beispielsweise bis zu 13,4 % gegenüber dem Stand der Technik reduziert werden.

Besonders bevorzugt ist die Radaufhängung dabei so gestaltet, dass der Lenkrollradius negativ ist. Dies bringt die bereits erwähnten Vorteile bezüglich der Bremsstabilität mit sich.

Günstig im Sinne der Erfindung ist, wenn das Feder-Dämpferbein in Seitenansicht der Radaufhängung gesehen vor der Antriebswelle angeordnet ist, wobei auch eine in Seitenansicht der Radaufhängung gesehene Anordnung möglich ist, bei welcher das Feder-Dämpferbein hinter der Antriebswelle angeordnet ist.

Zweckmäßiger Weise ist das Feder-Dämpferbein nur an einer Stelle mit dem Achsschenkelträger bzw. mit dem Radträger verbunden, wobei die Verbindung bzw. Befestigung an einer oberen Stelle des Radträgers sinnvoll ist. Denkbar ist aber auch, noch eine zusätzliche Verbindung bzw. Befestigung des Feder-Dämpferbeins zum Achsschenkelträger bzw. Radträger vorzusehen, um gegebenenfalls die Steifigkeit bzw. Stabilität weiter zu verbessern.

Weitere vorteilhafte Ausgestaltungen der Erfindung sind in den Unteransprüchen und der folgenden Figurenbeschreibung offenbart. Es zeigen:
- Fig.1: eine Radaufhängung in einem ersten Ausführungsbeispiel in Vorderansicht,
- Fig. 2: die Radaufhängung aus Fig. 1 in Seitenansicht,
- Fig.3: eine Radaufhängung in einem zweiten Ausführungsbeispiel in Vorderansicht,
- Fig. 4: die Radaufhängung aus Fig. 3 in Seitenansicht.

In den unterschiedlichen Figuren sind gleiche Teile stets mit denselben Bezugszeichen versehen, weswegen diese in der Regel auch nur einmal beschrieben werden.

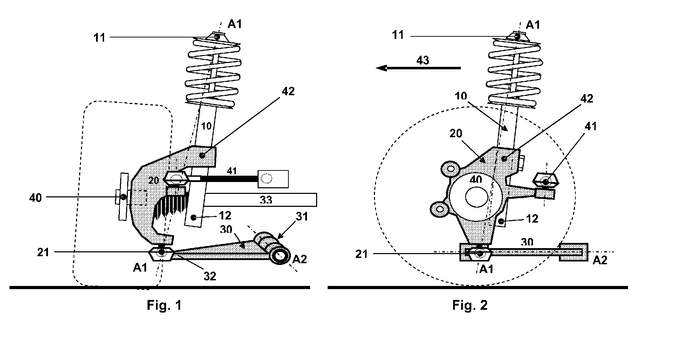

Fig. 1 zeigt eine erste Ausführungsform der erfindungsgemäßen Radaufhängung in Vorderansicht. Das Feder-Dämpferbein 10 ist am Achsschenkelträger bzw. Radträger 20 befestigt. An seinem unteren Ende weist der Achsschenkelträger 20 eine Lagerstelle 21 für den Querlenker 30 auf. Dieser greift mit seinem Ende 32 in diese Lagerstelle 21 ein. Das dazu gegenüberliegende Ende 31 des Querlenkers 30 ist schwenkbar um die Achse A2 gelagert. Am Achsschenkelträger bzw. Radträger 20 ist auch noch die Radnabe 40 vorgesehen. An dieser wird das hier gestrichelt dargestellte Rad befestigt. Des Weiteren ist auch eine Spurstange 41 umfaßt, welche zwischen dem Achsschenkelträger 20 und dem Lenkungssystem des Fahrzeuges angeordnet ist und die Lenkbetätigung über den Radträger 20 auf die Räder überträgt. Das Feder-Dämpferbein 10 bildet am Kinematikpunkt des Feder-Dämpferbeinstützlagers 11 mit der Lagerstelle 21 zusammen die Lenkdrehachse A1.

Das Feder-Dämpferbein 10 ist hier im vorliegenden Ausführungsbeispiel nur an einer Stelle bzw. in einem Befestigungsbereich 42 mit dem Achsschenkelträger bzw. Radträger 20 verbunden. Zur Erhöhung der Stabilität kann auch sinnvoll sein, das Feder-Dämpferbein 10 an seinem unteren Ende 12 bzw. an seinem zum ersten Befestigungsbereich 42 tiefer gelegenen Befestigungspunkt bzw. -bereich noch ein zweites Mal am Achsschenkelträger bzw. Radträger 20 zu befestigen.

Aus Fig. 2 ist ersichtlich, dass das Feder-Dämpferbein 10 in Seitenansicht gesehen hinter der Antriebswelle 33 angeordnet ist (siehe Fahrtrichtungspfeil 43). Das Feder-Dämpferbein 10 steht hierbei schräg zum Querlenker 30. Wie bereits erwähnt, wird unter schräg verstanden, dass der Winkel zwischen der Hauptachse des Feder-Dämpferbeins 10 und dem Querlenker 30 nicht 90° beträgt. Durch diese schräge Anordnung hinter der Antriebswelle 33 wird die hier erwünschte Reduzierung der Höhe des Feder-Dämpferbeinstützlagers 11 ermöglicht.

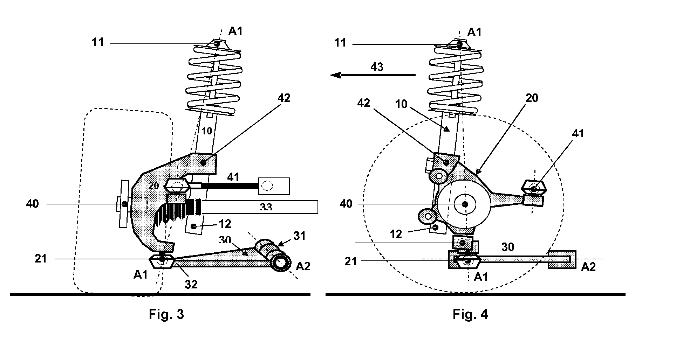

Die Fig. 3 und 4 zeigen ein weiteres Ausführungsbeispiel einer erfindungsgemäßen Radaufhängung. Wie erkennbar, ist das Feder-Dämpferbein 10 hier in Seitenansicht gesehen vor der Antriebswelle 33 angeordnet (siehe Fahrtrichtungspfeil 43). Die übrigen Bauteile bleiben unverändert. Auch hier ist, wie in Fig. 4 zu erkennen ist, das Feder-Dämpferbein 10 in Seitenansicht der Radaufhängung wiederum schräg zum Querlenker 30 angeordnet.

Ob das Feder-Dämpferbein 10 vor oder hinter der Antriebswelle 33 angeordnet ist, hängt vom jeweiligen Anwendungsfall ab. Jedenfalls bietet eine solche Anordnung in Kombination mit der Schrägstellung des Feder-Dämpferbeins 10 zum Querlenker 30 hin eine weitere Möglichkeit der Reduzierung der Höhe des Feder-Dämpferbeinstützlagers 11, wodurch der Fußgängerschutz verbessert und die Motorhaube bezogen auf bekannte Radaufhängungen in der Höhe reduziert werden kann. Zudem können weitaus größere Radbewegungen (vom Betrag bei einem Ein- bzw. Ausfedern gesehen) erreicht werden.

### Bezugszeichenliste:

- 10: Feder-Dämpferbein
- 11: Kinematikpunkt des Feder-Dämpferbeinstützlagers
- 12: Unteres Ende von 10
- 20: Achsschenkelträger/Radträger
- 21: Lagerstelle
- 30: Querlenker
- 31: Eines Ende von 30
- 32: Anderes Ende von 30
- 33: Antriebswelle
- 40: Radnabe
- 41: Spurstange
- 42: Befestigungsbereich von 10 an 20
- 43: Fahrtrichtung (Pfeil)
- A1: Lenkdrehachse
- A2: Schwenkachse von 30

## Patentansprüche

1. Radaufhängung für ein Kraftfahrzeug mit einem Feder-Dämpferbein (10), welches mit einem Achsschenkelträger (20) verbindbar ist, wobei ein Querlenker (30) vorgesehen ist, welcher an seinem einen Ende (31) um eine Achse (A2) schwenkbar gelagert ist und welcher mit seinem anderen Ende (32) unter Ausbildung einer Lagerstelle (21) an dem Achsschenkelträger (20) angelenkt ist,
**dadurch gekennzeichnet, dass**
die Lenkdrehachse (A1) durch die Lagerstelle (21) und den Kinematikpunkt des Feder-Dämpferbeinstützlagers (11) bestimmt ist und, dass das Feder-Dämpferbein (10) in Seitenansicht der Radaufhängung schräg zum Querlenker (30) angeordnet ist.

2. Radaufhängung nach Anspruch 1,
**dadurch gekennzeichnet, dass**
das Feder-Dämpferbein (10) in Seitenansicht der Radaufhängung vor oder hinter der Antriebswelle (33) angeordnet ist.

3. Radaufhängung nach Anspruch 1 oder 2,
**dadurch gekennzeichnet, dass**
das Feder-Dämpferbein (10) nur an einer Stelle mit dem Achsschenkelträger (20) verbunden ist.

4. Radaufhängung nach Anspruch 1 oder 2,
**dadurch gekennzeichnet, dass**
das Feder-Dämpferbein (10) an seinem unteren Ende (12) einen zweiten Befestigungspunkt zum Achsschenkelträger (20) aufweist.

5. Radaufhängung nach einem der vorhergehenden Ansprüche,
**dadurch gekennzeichnet, dass**
der Lenkrollradius negativ ist.
